# EUROPÄISCHE PATENTSCHRIFT

(11) **EP 1 714 126 B1**
(45) Veröffentlichungstag und Bekanntmachung des Hinweises auf die Patenterteilung: **16.07.2008**
(21) Anmeldenummer: 05707930.3
(22) Anmeldetag: 02.02.2005
(51) Int. Cl.: G01L 9/00, G01L 13/02

(54) **DIFFERENZDRUCKAUFNEHMER MIT ÜBERLASTMEMBRAN**
PRESSURE DIFFERENTIAL SENSOR COMPRISING AN EXCESS-LOAD MEMBRANE
CAPTEUR DE PRESSION DIFFERENTIELLE A MEMBRANE DE SURCHARGE

(30) Priorität: 09.02.2004 DE 102004006383
(43) Veröffentlichungstag der Anmeldung: 25.10.2006
(73) Patentinhaber: Endress + Hauser GmbH + Co. KG, 79689 Maulburg (DE)
(72) Erfinder: BURCZYK, Dietfried, 14513 Teltow (DE); DANNHAUER, Wolfgang, 14513 Teltow (DE); NÜRNBERGER, Ralf, 14473 Potsdam (DE)
(74) Vertreter: Andres, Angelika Maria
(86) Internationale Anmeldenummer: PCT/EP2005/050461
(87) Internationale Veröffentlichungsnummer: WO 2005/075952

(56) Entgegenhaltungen:
- DE-A1- 3 047 619
- DE-A1- 19 608 321
- US-A- 4 072 058

## Beschreibung

Die vorliegende Erfindung betrifft Differenzdruckaufnehmer mit hydraulischer Druckübertragung zu einem Messelement mittels einer Übertragungsflüssigkeit, insbesondere solche Differenzdruckaufnehmer mit einer Überlastmembran. Ein derartiger Differenzdruckaufnehmer ist beispielsweise in der Offenlegungsschrift DE 196 08 321 A1 offenbart. Differenzdruckaufnehmer weisen einen Hydraulikkörper auf, in dem eine Überlastkammer mit einer Überlastmembran ausgebildet ist, welche die Überlastkammer in eine Hochdruckhalbkammer und in eine Niederdruckhalbkammer teilt, wobei die Hochdruckhalbkammer mit einem ersten hydraulischen Pfad kommuniziert, der sich zwischen einem ersten Druckmittler mit einer Trennmembran über einem Membranbett und der Hochdruckseite einer Druckmesszelle erstreckt, und die Niederdruckhalbkammer mit einem zweiten hydraulischen Pfad kommuniziert, der sich zwischen einem zweiten Druckmittler mit einer Trennmembran über einem Membranbett und der Niederdruckseite dem Messelement erstreckt.

Bei großen Überlasten wird die Übertragungsflüssigkeit vollständig aus dem Druckmittler herausgedrückt, und die Trennmemban liegt an dem Membranbett an. Die bei Überlastdruck in den betreffenden hydraulischen Pfad verschobene Übertragungsflüssigkeit führt zu einer Auslenkung der Überlastmembran, um das zusätzliche Volumen aufzunehmen und den Überlastdruck abzubauen.

Die Federsteifigkeit der Überlastmembran richtet sich nach dem Temperatureinsatzbereich, dem möglichen Systemdruck, dem Volumen der hydraulischen Übertragungsflüssigkeit und dem Überlastfaktor des Messelementes. Der Überlastfaktor definiert, um welchen Faktor der Überlastdruck den Messbereich übersteigen kann, bevor die Trennmembran zur Anlage kommt und keine weitere Druckerhöhung am Meßchip auftritt. Je größer der Überlastfaktor des Messelementes ist, desto steifer kann die Überlastmembran ausgeführt werden. Je steifer die Überlastmembran ist, desto schneller reagiert die Messzelle auf Druckschwankungen, d.h. die Zelle reagiert dann schneller auf Druckschwankungen. Das ist besonders bedeutend bei Sensoren mit Druckmittleranbauten, die über eine lange Kapillarleitung mit dem Sensor verbunden sind. Die lange Kapillarleitung hat einen großen hydraulischen Widerstand und bildet mit der Überlastmembran ein RC-Glied, wobei eine weiche Überlastmembran mit einer großen hydraulische Kapazität C zu großen Zeitkonstanten bzw. langen Ansprechzeiten führen kann.
US Patent Nr. 4,072,058 offenbart einen Differenzdruckaufnehmer mit einem Paar von Trennmembranen und zwei zentralen Überlastmembranen, die jeweils über eine Feder vorgespannt sein können.
An den Überlastmembranen vorbei führt jeweils ein Bypass, der den Druck von der Frontseite einer Überlastmembran auf die Rückseite der jeweils anderen Überlastmembran führt.
Die Offenlegungsschrift DE 30 47 619 A1 offenbart einen Differenzdruckmesswandier mit einem hydraulischen Messwerk, welches eine zentrale Überlastmembran aufweist. Die genannten Geräte sind in der Lage, Überlasten von der Hochdruckseite und der Niederdruckseite aufzunehmen, in dem die Überlastmembran bzw. die Überlastmembranen ausgelenkt werden, bis die Trennmembran der Überlastenseite in die Anlage in ihrem Membranbett gelangt.

Die Federsteifigkeit der Überlastmembran ist im allgemeinen symmetrisch in HP- und LP-Richtung. Der Überlastfaktor des Messelementes ist zwischen HP- und LP-Belastung deutlich unterschiedlich. Die Auslegung der symmetrischen Überlastmembran richtet sich nach dem niedrigeren Berstwert des Messelementes, was die hochdruckseitige Zeitkonstante des Differenzdruckaufnehmers unnötig vergrößert. Es ist daher die Aufgabe der Erfindung, einen Differenzdruckaufnehmer bereitzustellen, der die beschriebenen Nachteile überwindet.
Die Aufgabe wird erfindungsgemäß gelöst durch den Druckaufnehmer gemäß des unabhängigen Patentanspruchs 1.
Der erfindungsgemäße Differenzdruckaufnehmer weist einen Hydraulikkörper auf, in dem eine einzige Überlastkammer mit einer einzigen Überlastmembran ausgebildet ist, welche die Überlastkammer in eine Hochdruckhalbkammer und in eine Niederdruckhalbkammer teilt, wobei die Hochdruckhalbkammer mit einem ersten hydraulischen Pfad kommuniziert, der sich zwischen einem ersten Druckmittler und der Hochdruckseite eines Druckmesselements erstreckt, und die Niederdruckhalbkammer mit einem zweiten hydraulischen Pfad kommuniziert, der sich zwischen einem zweiten Druckmittler und der Niederdruckseite einer Druckmesszelle erstreckt, dadurch gekennzeichnet, dass die Niederdruckhalbkammer ein im wesentlichen konvexes Membranbett aufweist, an welchem die Überlastmembran in der Ruhelage anliegt, d. h. in der Niederdruckhalbkammer ist in der Ruhelage zwischen dem Membranbett und der Überlastmembran praktisch kein Übertragungsmedium eingeschlossen, welches im Überlastfall verdrängt werden könnte. Im Ergebnis bewirkt dies, dass die Überlastmembran bei hochdruckseitigen Überlasten praktisch nicht mehr ausgelenkt wird und somit gegen hochdruckseitige Überlasten im wesentlichen eine hydraulische Kapazität von null aufweist. (Die hydraulische Kapazität aufgrund der Kompressibilität des Übertragungsmediums wird bei dieser Betrachtung vernachlässigt.) Zum Abbau von niederdruckseitigen Überlasten kann die Überlastmembran ausgelenkt werden, wobei in Abhängigkeit von einer ggf. vorgesehenen Vorspannung der Überlastmembran über dem konvexen Membranbett die Auslenkung erst oberhalb eines gewissen niederdruckseitigen Überlastschwellwertes auftritt.
Der Begriffes konvex bedeutet in diesem Zusammenhang, dass die kürzeste Verbindungslinie zwischen zwei beliebigen Punkten an der Oberfläche des niederdruckseitigen Membranbetts durch den Körper verläuft, in dem das Membranbett ausgebildet ist, oder entlang der Oberfläche des Membranbetts. D.h. das Niederdruckseite ist im wesentlichen planar oder nach außen gewölbt, oder es weist eine Kombination dieser Eigenschaften auf, wobei in diesem Fall ein planarer Bereich von einem gewölbten Bereich umgeben ist. Gegebenenfalls können von der Verbindungslinie optional vorhandene Vertiefungen bzw. hydraulische Kanäle geschnitten werden. Diese Vertiefungen bzw. Kanäle können in der Oberfläche des Membranbetts ausgebildet sein, um den niederseitigen Druck unter der Überlastmembran zu verteilen und im Überlastfall eine schnellere Auslenkung der Überlastmembran zu ermöglichen. Gleichermaßen kann die Druckzuleitung zur Niederdruckseite der Druckmesszelle von einer derartigen Vertiefung abgezweigt sein. Dies ist insofern vorteilhaft, als die Entlastung der Druckmesszelle im niederdruckseitigen Überlastfall bei dem Auslenken der Überlastmembran unmittelbar wirksam wird. Die genannten Vertiefungen und Kanäle sind so bemessen dass, es bei hochdruckseitigen Überlasten jedenfalls nicht zu hydraulisch relevanten Auslenkungen der die Vertiefungen überdeckenden Abschnitte der Überlastmembran kommt, d.h., sie bewirken keine relevante Kapazität gegen hochdruckseitige Überlasten.

Die Erfindung ist insbesondere geeignet um Differenzdrucksensoren für hohe Druckdifferenzen, beispielsweise mit Messbereichen bis zu 16 bar, 40 bar oder bis zu 100 bar bei Systemdrücken von einigen 100 bar, beispielsweise bis zu 400 bar, bereitzustellen

Die Vorspannung der Überlastmembran über dem konvexen Membranbett kann gemäß einer Weiterbildung der Erfindung so erfolgen, dass die Auslenkung der Überlastmembran bei niederdruckseitigen Überlasten erst bei Überschreiten des Messbereichs erfolgt. Es ist jedoch auch möglich, ein ebenes Membranbett auszubilden, bei dem die Überlastmembran bei LP-Belastung bereits im Meßbereich mitläuft.

Die Überlastmembran kann sowohl als vollflächige Membran oder als mittengefesselte Ringmembran gestaltet sein. Mittengefesselte Ringmembranen erlauben bei gegebenem Überlasthub einen kompakteren Aufbau des Hydraulikkörpers, als vollflächige Membranen, zudem weisen sie bei gegebenem Volumenhub eine geringere Hystereseanfälligkeit auf.

Ein Druckmittler im Sinne der Erfindung umfasst beispielsweise einen Druckmittlerkörper welcher ein Membranbett aufweist, über dem eine mit einem Messdruck beaufschlagbare Trennmembran befestigt ist, wobei zwischen der Trennmembran und dem Druckmittlerkörper eine Druckkammer ausgebildet, ist, welche mit einem hydraulischen Pfad kommuniziert über den eine Druckmesszelle mit dem in der Druckkammer vorherrschenden Druck beaufschlagbar ist. Der Druckmittlerkörper kann in den Hydraulikkörper integriert oder von diesem getrennt angeordnet sein.

Im Nenndruckbereich des Druckaufnehmers wird die Trennmembran druckabhängig ausgelenkt, ohne an dem Membranbett anzuliegen. Bei großen Überlasten wird die Übertragungsflüssigkeit vollständig aus der Druckkammer herausgedrückt, und die Trennmemban liegt an dem Membranbett an. Ein weiterer Druckanstieg in dem jeweiligen hydraulischen Pfad ist somit ausgeschlossen.

Die beschriebene asymmetrische Gestaltung der Überlastkammer bewirkt ohne Kompensationsmaßnahmen eine Asymmetrie hinsichtlich der Volumina der Übertragungsflüssigkeit. Dies kann zu unterschiedlichen temperaturabhängigen Auslenkungen der Trennmembranen führen, was aufgrund der endlichen Steifigkeit der Trennmembranen zu einem Nullpunktfehler führen kann. Insofern als jedoch die vorliegende Erfindung, insbesondere für Differenzdrucksensoren mit einem Messbereich von 10 bar und darüber, von Bedeutung ist, kann der Nullpunktfehler aufgrund der asymmetrischen Auslenkung der Trennmembranen in den meisten Fällen vernachlässigt werden, da die Steifigkeit der Trennmembranen im Vergleich zum Messbereich sehr gering ist. Für den Fall, dass dieser Nullpunktfehler dennoch vermieden werden soll, ist entsprechend für eine Symmetrisierung der jeweiligen Produkte von Füllvolumina und Wärmeausdehnungskoeffizient der Übertragungsflüssigkeit mit der Steifigkeit der Trennmembranen auf der Hochdruckseite und der Niederdruckseite vorzusehen. Hierzu kann jeder der Faktoren, entsprechend angepasst werden. D.h. es kann beispielsweise auf der Niederdruckseite eine Kammer für ein zusätzliches Füllvolumen vorgesehen sein, ohne jedoch die Abstützung der Überlastmembran durch das konvexe Membranbett zu beeinträchtigen. Gleichermaßen kann auf der Hochdruckseite eine weichere Trennmembran vorgesehen sein, um das größere Füllvolumen auf der Hochdruckseite zu kompensieren. Schließlich kann auf der Hochdruckseite eine Übertragungsflüssigkeit mit einem geringeren Wärmeausdehnungskoeffizienten eingesetzt werden.

Weitere Einzelheiten der Erfindung ergeben sich aus dem in der Zeichnung dargestellten Ausführungsbeispiel.

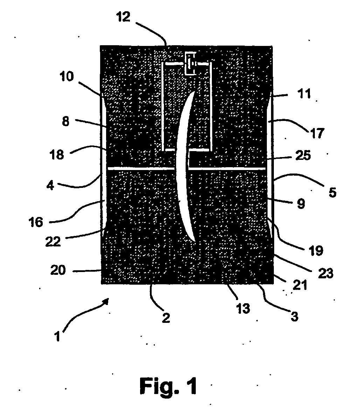

Fig. 1. eine Schnittzeichnung durch einen erfindungsgemäßen Differenzdruckaufnehmer.

Der in Fig. 1 gezeigte Differenzdruckaufnehmer umfasst einen im wesentlichen zylindrischen Hydraulikkörper 1 welcher einen ersten Halbkörper 2 und einen zweiten Halbkörper 3 aufweiset. Die Halbkörper weisen jeweils an einer Stirnfläche ein Membranbett 18,19 auf, über dem eine Trennmembran 4, 5 befestigt ist. Zwischen den Trennmembranen und den Membranbetten ist jeweils eine Druckkammer 16, 17 ausgebildet, von der sich jeweils ein Druckkanal 8, 9 in das Innere des Hydraulikkörpers 1 erstreckt. Im einzelnen erstreckt sich ein erster Druckkanal 8 von der ersten Druckkammer 16 au einer Hochdruckhalbkammer 20, die zwischen der von der ersten Druckkammer 16 abgewandten Stirnfläche des ersten Halbkörpers 2 und einer Überlastmembran ausgebildet ist, und ein zweiter Druckkanal 9 von der zweiten Druckkammer 17 zu einer Niederdruckhalbkammer 21, die zwischen der von der zweiten Druckkammer 17 abgewandten Stirnfläche des zweiten Halbkörpers 3 und der Überlastmembran 13 ausgebildet ist. Die Hochdruckhalbkammer 20 weist eine konkave Halbkammerwand 22 auf, welches in der entsprechenden Stirnfläche des ersten Halbkörpers 2 ausgebildet ist. Die Niederdruckhalbkammer 21 weist eine Halbkammerwand auf, welche als konvexes Membranbett 23 in der entsprechenden Stirnfläche des zweiten Halbkörpers ausgebildet ist. Die Überlastmembran 13 ist über dem Membranbett 23 vorgespannt. D.h. das Volumen der Niederhalbkammer 21 ist in der Ruhelage der Überlastmembran praktisch null. Insoweit kann die Überlastmembran bei hochdruckseitigen Überlasten auch nicht ausgelenkt werden, um diese Überlasten abzubauen. Andererseits kann die Überlastmembran bei niederdruckseitigen Überlasten ausgelenkt werden, wenn diese einen durch die Vorspannung vorgegebenen Schwellwert übersteigen. Somit wird die Niederdruckseite effektiv vor Überlasten geschützt, ohne das dynamische Verhalten des Differenzdruckaufnehmers zu beinträchtigen.

Von der Hochdruckhalbkammer 20 zweigt ein erster Kanal 10 ab, über den die Hochdruckseite einer Differenzdruckmesszelle 12 mit dem in der Hochdruckhalbkammer 20 herrschenden Druck beaufschlagt wird. Gleichermaßen erstreckt sich von der Niederdruckhalbkammer 21 ein zweiter Kanal 11 zur Niederdruckseite der Differenzdruckmesszelle 12. Hierzu ist ein Verbindungskanal 25 als Vertiefung in der Oberfläche des Membranbetts 23 ausgebildet, der sich zwischen dem zweiten Druckkanal 9 und dem zweiten Kanal 11 erstreckt.

Die Differenzdruckmesszelle kann jede geeignete Differenzdruckmesszelle sein, die dem Fachmann geläufig ist. Auf den Typ der Messzelle kommt es im Zusammenhang mit der vorliegenden Erfindung nicht an. Im Ausführungsbeispiel umfasst die Differenzdruckmesszelle 12 eine Halbleitermembran mit einem flexiblen Bereich in einer Stärke von beispielsweise 30 µm und integrierten piezoresistiven Widerstandselementen. Die Halbleitermembran weist einen ringförmigen Randbereich auf, der auf der Niederdruckseite erheblich stärker ist als 30 µm, beispielsweise einige 100 µm. Mit dem niederdruckseitigen Randbereich ist die Membran auf einem Gegenkörper entlang einer Fügestelle druckdicht befestigt. Bei einer Drucküberlast auf die Hochdruckseite der Halbleitermembran wird der Randbereich der Membran daher gegen den Gegenkörper gedrückt. Es besteht kaum eine Gefahr dass die Fügestelle versagen könnte. Wenn umgekehrt eine Drucküberlast auf die Niederdruckseite der Halbleitermembran wirkt, treten Zugkräfte in der Fügestelle und ggf. Kerbspannungen zwischen dem niederdruckseitigen Randbereich und dem flexiblen Bereich der Halbleitermembran auf.

Es ist daher eine geringere Überlastfestigkeit der Differenzdruckmesszelle gegen niederdruckseitige Überlasten gegeben. Dies ist bei der Konstruktion einer Überlastkammer, welche die Hochdruckhalbkammer 20 und die Niederdruckhalbkammer 21 sowie eine Überlastmembran 13 umfasst, berücksichtigt

Die Überlastmembran 13 kann damit frühzeitig auf niederdruckseitige Überlasten reagieren, ohne die Dynamik des Differenzdruckaufnehmers bei der Detektion von schnellen hochdruckseitigen Druckschwankungen zu beeinträchtigen.

## Patentansprüche

1. Differenzdruckaufnehmer, umfassend einen Hydraulikkörper (1), in dem eine einzige Überlastkammer mit einer einzigen Überlastmembran (13) ausgebildet ist, welche die Überlastkammer in eine Hochdruckhalbkammer (20) und in eine Niederdruckhalbkammer (21) teilt, wobei die Hochdruckhalbkammer (20) mit einem ersten hydraulischen Pfad (8, 10) kommuniziert, der sich zwischen einem ersten Druckmittler und der Hochdruckseite einer Druckmesszelle (12) erstreckt, und die Niederdruckhalbkammer (21) mit einem zweiten hydraulischen Pfad (9, 11) kommuniziert, der sich zwischen einem zweiten Druckmittler und der Niederdruckseite der Druckmesszelle erstreckt, **dadurch gekennzeichnet, dass** die Niederdruckhalbkammer ein im wesentlichen konvexes Membranbett aufweist, an welchem die Überlastmembran in der Ruhelage anliegt, wobei die Überlastmembran (13) über dem konvexen Membranbett vorgespannt ist, und wobei die Überlastmembran (13) durch hochdruckseitige Überlasten nicht auslenkbar ist.

2. Differenzdruckaufnehmer nach Anspruch 1, wobei die Überlastmembran bei niederdruckseitige Überlasten unterhalb eines Schwellwerts nicht auslenkbar ist.

3. Differenzdruckaufnehmer nach einem der vorherigen Ansprüche, wobei der erste und der zweite Druckmittler einen Druckmittlerkörper umfassen welcher ein Membranbett (18, 19) aufweist, über dem eine mit einem Messdruck beaufschlagbare Trennmembran (4, 5) befestigt ist, wobei zwischen der Trennmembran (4, 5) und dem Druckmittlerkörper eine Druckkammer (16, 17) ausgebildet ist, welche mit einem hydraulischen Pfad (8,10, 9, 11) kommuniziert, über den eine Druckmesszelle (12) mit dem in der Druckkammer (16, 17) vorherrschenden Druck beaufschlagbar ist.

4. Differenzdruckaufnehmer nach Anspruch 3, wobei die Druckmittlerkörper des ersten und des zweiten Druckmittlers einstückig mit dem Hydraulikkörper (1) ausgebildet sind.

5. Differenzdruckaufnehmer nach Anspruch 3, wobei die Druckmittlerkörper des ersten und des zweiten Druckmittlers getrennt von dem Hydraulikkörper angeordnet und mit diesem über Druckleitungen verbunden sind.

## Claims

1. Differential pressure sensor, comprising a hydraulic body (1) in which a single overload chamber is formed with a single overload membrane (13) which divides the overload chamber into a high-pressure semi-chamber (20) and a low-pressure semi-chamber (21), where the high-pressure semi-chamber (20) communicates with a primary hydraulic path (8, 10) - which extends between a primary diaphragm seal and the high-pressure side of a pressure measuring cell (12) - and the low-pressure semi-chamber (21) communicates with a second hydraulic path (9, 11) - which extends between a second diaphragm seal and the low-pressure side of the pressure measuring cell - **characterized in that** the low-pressure semi-chamber exhibits a primarily convex membrane bed on which the overload membrane rests in the rest position where the overload membrane (13) is pretensioned over the convex membrane bed and where the overload membrane (13) cannot be deflected by overloads on the high-pressure side.

2. Differential pressure sensor as per Claim 1 where the overload membrane cannot be deflected in the event of overloads on the low-pressure side below a threshold value.

3. Differential pressure sensor as per one of the previous Claims where the primary and second diaphragm seal comprise a diaphragm seal body which exhibits a membrane bed (18, 19) over which a separating membrane (4, 5) - which can be subject to a measuring pressure - is secured, where a pressure chamber (16, 17) is formed between the separating membrane (4, 5) and the diaphragm seal body. The pressure chamber (16, 17) communicates with a hydraulic path (8, 10, 9, 11) via which a pressure measuring cell (12) can be exposed to the pressure present in the pressure chamber (16, 17).

4. Differential pressure sensor as per Claim 3 where the diaphragm seal bodies of the primary and the second diaphragm seal are formed as a single unit with the hydraulic body (1).

5. Differential pressure sensor as per Claim 3 where the diaphragm seal bodies of the primary and second diaphragm seal are arranged separate from the hydraulic body and are connected to the hydraulic body via pressure lines.

## Revendications

1. Capteur de pression différentielle, comprenant un corps hydraulique (1), dans lequel est formé une unique chambre de surcharge présentant une unique membrane de surcharge, qui divise la chambre de surcharge en une demi-chambre haute pression (20) et une demi-chambre basse pression (21), la demi-chambre haute pression (20) communiquant avec un premier chemin hydraulique, qui s'étend entre un premier séparateur et le côté haute pression d'une cellule de mesure de pression (12), et la demi-chambre basse pression (21) communiquant avec un deuxième chemin hydraulique, qui s'étend entre un deuxième séparateur et le côté basse pression de la cellule de mesure de pression (12), **caractérisé en ce que** la demi-chambre basse pression présente un lit de membrane essentiellement convexe, sur lequel repose la membrane de surcharge en position de repos, la membrane de surcharge (13) étant précontrainte sur le lit de membrane convexe et la position de la membrane de surcharge (13) ne pouvant pas être modifiée par les surcharges côté haute pression.

2. Capteur de pression différentielle selon la revendication 1, la position de la membrane de surcharge ne pouvant pas être modifiée par des surcharges côté basse pression inférieures à un seuil déterminé.

3. Capteur de pression différentielle selon l'une des revendications précédentes, le premier et le deuxième séparateurs comprenant un corps de séparation, lequel présente un lit de membrane (18, 19), par l'intermédiaire duquel est fixée une membrane de séparation (4, 5) pouvant être soumise à la pression de mesure, une chambre de pression (16, 17) étant formée entre la membrane de séparation (4, 5) et le corps de séparation, laquelle chambre communique avec un chemin hydraulique (8, 10, 9, 11), par l'intermédiaire duquel une cellule de mesure de pression (12) peut être soumise à la pression régnant dans la chambre de pression (16, 17).

4. Capteur de pression différentielle selon la revendication 3, les corps de séparation du premier et du deuxième séparateurs étant formés en une pièce avec le corps hydraulique (1).

5. Capteur de pression différentielle selon la revendication 3, les corps de séparation du premier et du deuxième séparateurs étant disposés de façon distincte du corps hydraulique et reliés avec celui-ci par le biais de conduites de pression.
